# EUROPEAN PATENT SPECIFICATION

(11) **EP 2 655 867 B1**
(45) Date of publication and mention of the grant of the patent: **04.11.2020**
(21) Application number: 11796790.1
(22) Date of filing: 05.12.2011
(51) Int. Cl.: F03B 5/00, F03B 13/26, F03B 17/06

(54) **WATER CURRENT TURBINE ARRANGEMENTS AND GROUP CONTROL**
WASSERTURBINENANORDNUNG UND GRUPPENSTEUERUNG
ARRANGEMENT ET COMMANDE DE GROUPE DE TURBINE HYDRAULIQUE

(30) Priority: 23.12.2010 GB 201021803
(43) Date of publication of application: 30.10.2013
(73) Proprietor: GE Energy (UK) Limited, Altrincham, Cheshire WA14 2DT (GB)
(72) Inventor: VIGARS, Paul, Bristol Bristol BS1 4PB (GB)
(74) Representative: Openshaw & Co.
(86) International application number: PCT/GB2011/052398
(87) International publication number: WO 2012/085531

(56) References cited:
- WO-A1-2004/011799
- WO-A1-2004/111446
- US-A1- 2007 299 548
- US-A1- 2009 099 702

## Description

The present invention relates to water current turbine arrangements, and, in particular, to a control scheme for water current turbine arrangements.

### BACKGROUND OF THE INVENTION

It is widely know that easily accessible resources of fossil fuels are declining. In addition, the impact of the use of fossil fuels upon the environment has become increasingly apparent. As a result of this, it has become imperative that viable alternative energy sources are used as effectively and efficiently as possible. The use of turbines to capture the power of water flow, such as tidal, river and ocean current flows is becoming a viable source of alternative energy. The turbine equipment used to capture such water flow energy typically includes a shaft driven generator connected using a drivetrain to a rotor assembly. The rotor assembly includes a plurality of rotor blades that are driven by the water flow, so as to turn an input shaft of the drivetrain.

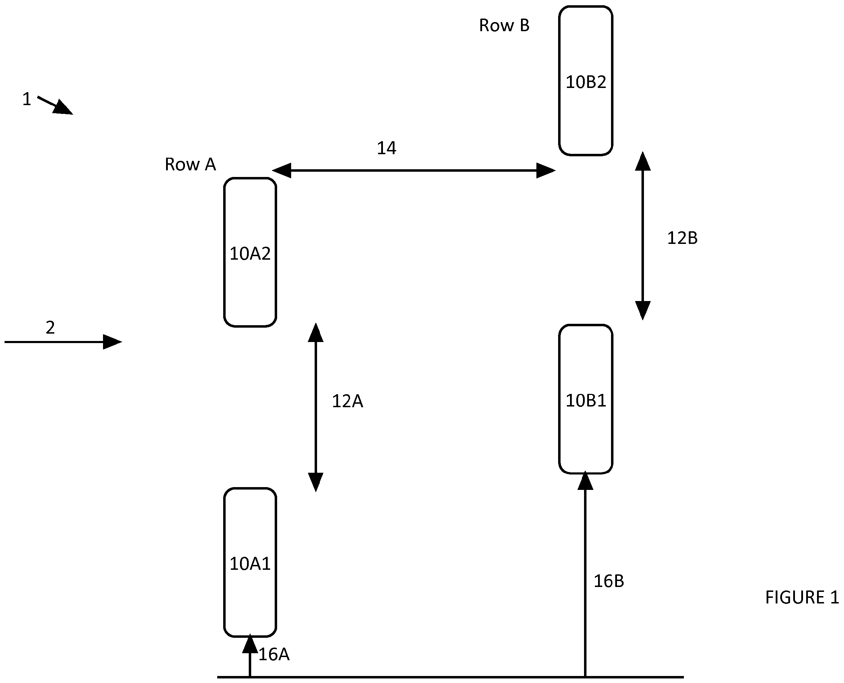

In order to be economically practical, multiple water current turbine devices need to be deployed in a suitable area. For example, a tidal turbine farm may have tens to hundreds of turbines. The turbines are preferably arranged in an array having multiple rows of multiple turbines. Figure 1 of the accompanying drawings illustrates, in very simplified schematic form, a plan view of a turbine array 1. The turbine array 1 could be deployed in a tidal flow area, a river flow, an ocean current, or any other suitable water current area. Although it is preferable for the turbines to be arranged in an array, geography, bathymetry and other factors may mean that a turbine farm has another arrangement.

The exemplary turbine array 1 of Figure 1 comprises two rows (A and B) of two turbines 10A1, 10A2 and 10B1, 10B2 respectively. The number of turbines shown in Figure 1 has been limited to two in each row for the sake of clarity and simplicity. Similarly, the number of rows has been reduced to show the minimum number need to form an array. It will be readily appreciated that a practical array could have any number of rows, and any number of turbines per row. In Figure 1, a water current is indicated by arrow 2, and flows in a direction such that Row A is upstream of Row B.

The turbines in a row are spaced apart from one another by a turbine spacing 12A, 12B for the row concerned. This spacing may be the same for each row, or may vary between rows, and is to be considered a nominal value, as the exact spacing of turbines along a row is dependent on many factors including the nature of the bed on which the turbines are located.

The rows are spaced apart by a row spacing 14, and, again, this spacing may be the same between each pair of adjacent rows in the array, or could vary across the array. As for turbine spacing, the row spacing is to be considered a nominal value. In addition, the row spacing can vary along the rows.

The first turbine 10A1 in Row A is spaced from an arbitrary datum by a first offset value 16A, whilst the first turbine 10B1 of Row B is offset by a second offset value 16B. The first and second offset values 16A, 16B may be substantially equal to one another, in which case the turbine would effectively be lined up behind one another in the array, with respect to the direction of the flow. In a more practical example, however, the first and second offset values 16A, 16B would be different. Such different offset values leads to the turbines in Row B being offset, or staggered, with reference to the turbines in Row A. Such a situation is illustrated in Figure 1.

One way to increase the energy yield of a water current turbine array, such as that shown in Figure 1, is simply to increase the number of water current turbines in the array, by packing the turbines more closely; the turbine spacing along the row, and, in particular, the row spacing could be reduced. In such a way the number of turbines in a given area (the "packing density") is increased and therefore the amount of energy that can be captured from the flow is increased. This is the case when the flow speed of the current is high enough to provide more energy than needed for all of the turbines to produce a constant rated power level. As is well known, when the flow speed is over a threshold level (a "rated level"), the turbines are controlled to produce a constant rated power output.

However, as the flow speed drops below the rated level, the amount of energy in the flow decreases. In this case some, or all, of the turbines are not able to generate the rated power output. Upstream turbines affect the amount of energy available for capture by downstream turbines, and the amount of energy available to the downstream turbines decreases as the row spacing decreases. It will be appreciated that downstream in the current context is any position having a component in the direction of the flow.

Previously-considered control schemes for such turbine farms work on the principle of maximising power generation for each turbine, ignoring any effects on other turbines in the array. In this previously-considered control scheme, all turbines are controlled to generate maximum power. However, this may result in downstream turbines failing to generate a desirably high level of power, and, for example, not being able to run at ideal operating conditions. One such previously-considered scheme is described in European Patent Application 09005504.7, published as EP 2 241 749, in which each individual turbine is controlled in order to maximise from that turbine, and that turbine only, without consideration of any of the other turbines in the array.

Accordingly, it is desirable to be able to overcome the disadvantages of previously-considered schemes.

WO 2004/111446 describes an arrangement in which axial induction of an upstream turbine is lowered to reduce turbulence at a downstream turbine. US 2007/0299548 describes a method for optimizing the operation of wind farms. US 2009/0099702 describes the optimization of wake interaction between wind turbines.

### SUMMARY OF THE INVENTION

According to a first aspect of the invention there is provided a method in accordance with claim 1.

The first and second pluralities of water current turbines may be arranged in respective first and second rows, so as to form an array.

Such a method may further comprise receiving measurement information indicative of respective power generation characteristics of the turbines, and using received measurement information in controlling the turbines.

Such a method may comprise controlling the power generation characteristics of the first plurality of water current turbines independently of the power generation characteristics of the second plurality of water current turbines. Alternatively, such a method may comprise defining groups of water current turbines, and controlling the power generation characteristics of water current turbines in one such group independently of turbines in another group.

The water current turbine array may include at least one additional plurality of water current turbines arranged in an additional row of the array.

According to a second aspect of the present invention, there is provided a controller in accordance with claim 8.

Such a controller may further comprise a measurement receiver unit operable to receive measurement information indicative of respective power generation characteristics of the turbines, the control unit being operable to use received measurement information in generating the control signals relating to power generation characteristics.

Such a controller may be operable to generate and output respective control signals to such a first plurality of water current turbines independently of generating and outputting respective control signals to such a second plurality of water current turbines.

Alternatively, such a controller may be operable to define groups of water current turbines, and to generate and output respective control signals to water current turbines in one such group independently of turbines in another such group.

### BRIEF DESCRIPTION OF THE DRAWINGS

Figure 1 is a schematic plan view of a simplified water current turbine array;
Figure 2 is a schematic view of a water current turbine embodying one aspect of the present invention;
Figure 3 is a schematic view of a control system embodying another aspect of the present invention for a water current turbine array;
Figure 4 is a flow chart illustrating steps in the method embodying another aspect of the present invention.

### DETAILED DESCRIPTION OF THE PREFERRED EMBODIMENTS

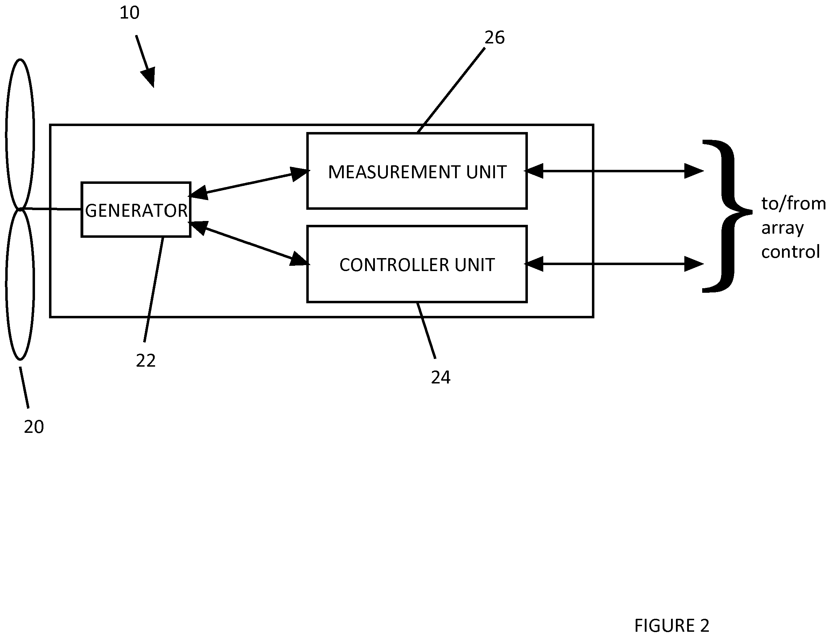

Figure 2 is a block diagram of a water current turbine 10 embodying one aspect of the present invention, for use in a water current turbine array, such as that illustrated in Figure 1. The water current turbine 10 includes a rotor assembly 20, which is arranged to be driven by the water current. The rotor assembly 20 rotates a shaft that transmits power to an electrical generator 22, which operates to generate electricity for supply to the power grid.

The water current turbine 10 is provided with a controller unit 24, which operates to control the power generation characteristics of the electrical generator 22, so that the generator provides a required electrical power output. A measurement unit 26 is provided for monitoring the generator 22, and for providing measurement information regarding the power generating characteristics of the generator 22, in particular, and of the water current turbine 10 in general.

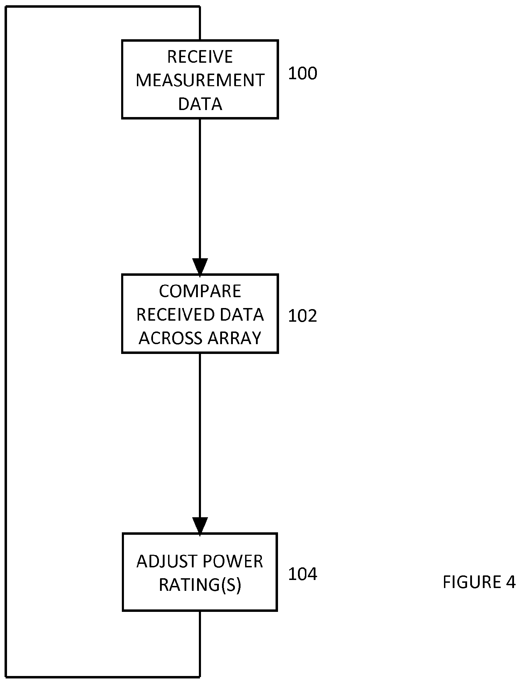

The controller unit 24 and the measurement unit 26 are operable to transfer data with an array control unit (to be described with reference to Figure 4).

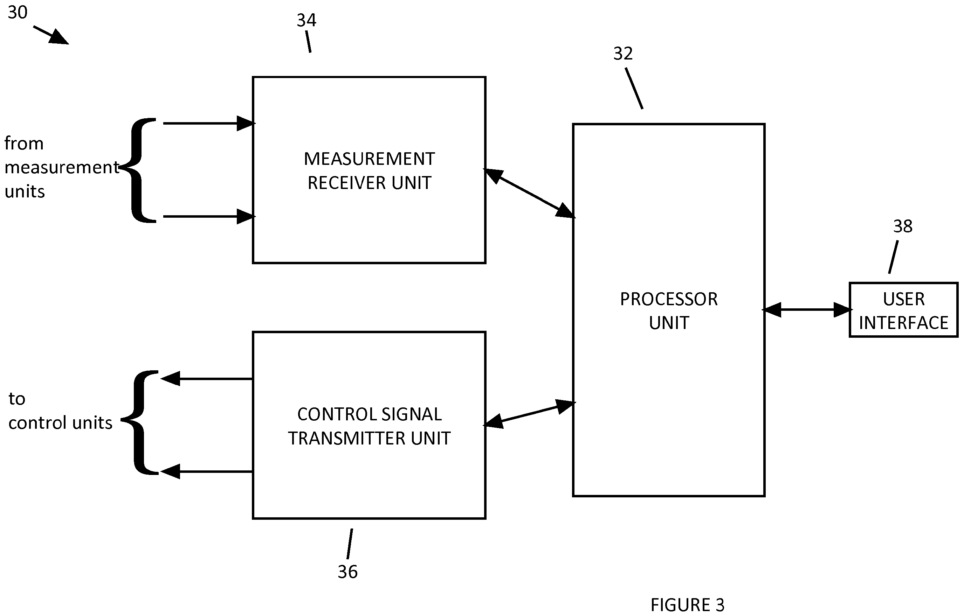

Figure 3 illustrates an array control unit 30 which includes a processor unit 32, which provides the overall processing functionality of the control unit 30. The processor unit 32 also provides a user interface 38 for interaction with the human controller of the system.

The array control unit 30 also includes a measurement receiver unit 34 and a control signal transmitter unit 36. The measurement receiver unit 34 is operable to receive measurement information from the measurement units 26 in the water current turbines 10 shown in Figure 2. Operating information may be gathered in any convenient manner, for example, the water current turbines may be polled individually at regular intervals, or may themselves operate to transmit information to the measurement receiver unit 34 of the array control unit 30.

The control signal transmitter unit 36 is operable to transmit control information from the processor unit 32 to the controller units 24 in the water current turbines 10. This control information, as described in more detail below, serves to control the power generating characteristics and parameters of the water current turbine 10.

Figure 4 is a flow diagram illustrating steps in a method embodying another aspect of the present invention. At step 100, measurement data is received by the measurement receiver unit 34 from the measurement units 26 in the turbines 10, and this information is transferred to the processor unit 32.

At step 102, the processor unit 32 compares received measurement information for the turbines 10 across the whole array 1, and calculates control signals for adapting each water current turbine in order to maximise the power generation of the array as a whole. The turbine control information is then transmitted to the controller units 24 of the turbines 10 by the control signal transmitter unit 36.

The processor unit 32 operates to determine a power generation control scheme for each turbine, such that the overall power generation of the array of turbines as a whole is maximised, optimised, or controlled to meet a particular criterion. For example, the processor unit 32 may determine that selected turbines must operate at a reduced power output level in order that other turbines in the array are able to operate at a level higher than would otherwise be possible. Controlling the turbines individually allows for optimised control for each of the turbines. Using the effects and conditions placed on a given turbine by the other turbines in the array as a source of control information, and then using that information to control the given turbine and the other turbines enables the overall output of the array as a whole to be optimised for the prevailing conditions.

The control unit 24 in a water current turbine 10 then operates to control the power generating characteristics of that turbine so that the required level of power is generated. This control is achieved by controlling the electrical generator 22 and/or the rotor assembly 20. Other power rating control techniques include hydraulic transmission settings or gearbox ratios.

For example, the control unit 24 may operate to control pitching of the blades of the rotor assembly 20, and/or may control the electrical torque of the electrical generator 22, such that the power generation characteristics of the water current turbine are adjusted in accordance with the received instructions.

In a practical example, a water current turbine may be rated at 1 MW output power, and an array of such machines may be used to generate electricity from a given water current flow. When the water current flow speeds are low enough such that none of the water current turbines is able to generate the rated 1 MW power, (or when that flow speed is such that only some of the rows of turbines are able to produce the rated power of 1 MW, with subsequent rows achieving only a proportion of the rated power) then the processor unit 32 operates to control the power output of the turbines such that the power generation of the array of a whole is maximised.

In one example, it may be that the control scheme requires that each turbine in the first row (A) is operated at 90% of rated power (in this example 900 kW) such that more energy is available to be captured by the second and subsequent rows. In this way, the overall power generation energy capture of the array can be substantially maximised.

In another example, all of the turbines in the array can be controlled to produce the same power output, for example 75% of rated power. In another example, turbines can be controlled in rows; the first row is set to generate power at a particular level, the second at another level, and so on.

Alternatively, the turbines may be grouped in other ways, and each grouped controlled separately. For example, those turbines in a central region of the array may form one group, whilst turbines in edge regions of the array could form another group. Since flow conditions may be different between the different groups, in accordance with the principles of the present invention, the different groups can be controlled separately in order to maximise the power generation of the farm as a whole.

Such a control scheme enables downstream turbines to operate at a power generation level greater than would be achieved if the upstream turbines are simply controlled to generate maximum power, and the increase in performance of the downstream turbines makes up for, or exceeds, the reduction in power generation of the upstream turbines. The scope of the protection is defined by the appended claims.

## Claims

1. A method for controlling a water current turbine arrangement which includes first and second pluralities of water current turbines (10) operable to generate electricity from a water current, the first plurality of water current turbines (10) being upstream of at least one of the turbines (10) in the second plurality, the water current turbines having respective individual power generation characteristics, the method comprising:
controlling the power generation characteristics of the water current turbines (10) in the first plurality independently of turbines (10) in the second plurality;
receiving measurement information for the turbines (10) across the whole arrangement;
using effects and conditions placed on the second plurality of water current turbines (10) by the first plurality of turbines (10) in the arrangement as a source of control information, and then using that information to control the first and second pluralities of water current turbines (10) wherein each plurality is controlled separately, such that the overall output of the arrangement as a whole is optimized for prevailing conditions.

2. A method as claimed in claim 1, wherein the first and second pluralities of water current turbines (10) are arranged in respective first and second rows, so as to form an array (1).

3. A method as claimed in any one of the preceding claims, wherein the water current turbine arrangement includes at least one additional plurality of water current turbines (10).

4. A method as claimed in claim 3, wherein the or each additional plurality of water current turbines (10) is arranged in at least one additional row of the arrangement.

5. A controller for controlling a water current turbine arrangement which includes first and second pluralities of water current turbines operable to generate electricity from a water current, the first plurality of water current turbines being upstream of at least one of the turbines in the second plurality, the water current turbines having respective individual power generation characteristics, the controller arranged to generate and output control signals relating to respective power generation characteristics for water current turbines in the first plurality independently of control signals relating to turbines in the second plurality, the controller comprising:
a measurement receiver unit (26) arranged to receive measurement information for the turbines (10) across the whole arrangement;
a control unit arranged to use effects and conditions placed on the second plurality of water current turbines (10) by the first plurality of turbines in the arrangement as a source of control information, and to use that information to control the first and second pluralities of water current turbines (10) wherein each plurality is controlled separately, such that the overall output of the arrangement as a whole is optimised for prevailing conditions.

6. A water current turbine arrangement comprising first and second pluralities of water current turbines (10) operable to generate electricity from a water current, the first plurality of water current turbines being upstream of at least one of the turbines in the second plurality, and a controller as claimed in claim 5, the controller being connected with each of the turbines (10) in the arrangement for control thereof.

7. An arrangement as claimed in claim 6, wherein the first and second pluralities of water current turbines (10) are arranged in respective first and second rows, so as to form an array (1).

8. A water current turbine arrangement as claimed in claim 7, further comprising at least one additional plurality of water current turbines (10) arranged in at least one additional row of the array.

## Patentansprüche

1. Verfahren zum Steuern einer Wasserströmungsturbinenanordnung, die eine erste und eine zweite Vielzahl von Wasserströmungsturbinen (10) beinhaltet, die betriebsfähig sind, um Elektrizität aus einer Wasserströmung zu erzeugen, wobei sich die erste Vielzahl von Wasserströmungsturbinen (10) stromaufwärts von wenigstens einer der Turbinen (10) der zweiten Vielzahl befindet, wobei die Wasserströmungsturbinen entsprechende individuelle Stromerzeugungseigenschaften aufweisen, wobei das Verfahren Folgendes umfasst:
Steuern der Stromerzeugungseigenschaften der Wasserströmungsturbinen (10) in der ersten Vielzahl unabhängig von Turbinen (10) in der zweiten Vielzahl;
Empfangen von Messinformationen für die Turbinen (10) über die gesamte Anordnung hinweg;
Verwenden von Wirkungen und Bedingungen, die von der ersten Vielzahl von Turbinen (10) in der Anordnung auf die zweite Vielzahl von Wasserströmungsturbinen (10) als eine Quelle von Steuerinformationen angebracht werden, und dann Verwenden dieser Informationen zum Steuern der ersten und zweiten Vielzahl von
Wasserströmungsturbinen (10), wobei jede Vielzahl derart separat gesteuert wird, dass die Gesamtleistung der Anordnung als Ganzes für vorherrschende Bedingungen optimiert wird.

2. Verfahren nach Anspruch 1, wobei die erste und die zweite Vielzahl von Wasserströmungsturbinen (10) in jeweiligen ersten und zweiten Reihen angeordnet sind, sodass eine Gruppe (1) ausgebildet wird.

3. Verfahren nach einem der vorhergehenden Ansprüche, wobei die Wasserströmungsturbinenanordnung wenigstens eine zusätzliche Vielzahl von Wasserströmungsturbinen (10) beinhaltet.

4. Verfahren nach Anspruch 3, wobei die oder jede zusätzliche Vielzahl von Wasserströmungsturbinen (10) in wenigstens einer zusätzlichen Reihe der Anordnung angeordnet ist.

5. Steuervorrichtung zum Steuern einer Wasserströmungsturbinenanordnung, die eine erste und eine zweite Vielzahl von Wasserströmungsturbinen beinhaltet, die betriebsfähig sind, um Elektrizität aus einer Wasserströmung zu erzeugen, wobei sich die erste Vielzahl von Wasserströmungsturbinen stromaufwärts von wenigstens einer der Turbinen der zweiten Vielzahl befindet, wobei die Wasserströmungsturbinen entsprechende individuelle Stromerzeugungseigenschaften aufweisen, wobei die Steuervorrichtung angeordnet ist, um Steuersignale zu erzeugen und auszugeben, die sich auf jeweilige Stromerzeugungseigenschaften für Wasserströmungsturbinen in der ersten Vielzahl beziehen, unabhängig von Steuersignalen, die sich auf Turbinen in der zweiten Vielzahl beziehen, wobei die Steuervorrichtung Folgendes umfasst:
eine Messaufnehmereinheit (26), die angeordnet ist, um Messinformationen für die Turbinen (10) über die gesamte Anordnung hinweg aufzunehmen;
eine Steuereinheit, die angeordnet ist, um Wirkungen und Bedingungen zu verwenden, die von der ersten Vielzahl von Turbinen in der Anordnung auf die zweite Vielzahl von Wasserströmungsturbinen (10) als eine Quelle von Steuerinformationen angebracht werden, und diese Informationen zur Steuerung der ersten und der zweiten Vielzahl von Wasserströmungsturbinen (10) zu verwenden , wobei jede Vielzahl derart separat gesteuert wird, dass die Gesamtleistung der Anordnung als Ganzes für vorherrschende Bedingungen optimiert wird.

6. Wasserströmungsturbinenanordnung, die eine erste und eine zweite Vielzahl von Wasserströmungsturbinen (10), die betriebsfähig sind, um Elektrizität aus einer Wasserströmung zu erzeugen, wobei sich die erste Vielzahl von Wasserströmungsturbinen stromaufwärts von wenigstens einer der Turbinen in der zweiten Vielzahl befindet, und eine Steuervorrichtung nach Anspruch 5 umfasst, wobei die Steuervorrichtung mit jeder der Turbinen (10) in der Anordnung zur Steuerung davon verbunden ist.

7. Anordnung nach Anspruch 6, wobei die erste und die zweite Vielzahl von Wasserströmungsturbinen (10) in jeweiligen ersten und zweiten Reihen angeordnet sind, sodass eine Gruppe (1) ausgebildet wird.

8. Wasserströmungsturbinenanordnung nach Anspruch 7, ferner umfassend wenigstens eine zusätzliche Vielzahl von Wasserströmungsturbinen (10), die in wenigstens einer zusätzlichen Reihe der Gruppe angeordnet sind.

## Revendications

1. Procédé de commande d'un agencement d'hydroliennes qui comporte des première et seconde pluralités d'hydroliennes (10) pouvant fonctionner pour générer de l'électricité à partir d'un courant d'eau, la première pluralité d'hydroliennes (10) étant en amont d'au moins une des turbines (10) dans la seconde pluralité, les hydroliennes présentant des caractéristiques de génération d'énergie électrique individuelles respectives, le procédé comprenant :
la commande des caractéristiques de génération d'énergie électrique des hydroliennes (10) dans la première pluralité indépendamment des turbines (10) dans la seconde pluralité ;
la réception des informations de mesure pour les turbines (10) sur l'ensemble de l'agencement ;
l'utilisation des effets et des conditions mis en place sur la seconde pluralité d'hydroliennes (10) par la première pluralité de turbines (10) dans l'agencement comme source d'informations de commande, puis l'utilisation de ces informations pour commander les première et seconde pluralités d'hydroliennes (10), chaque pluralité étant commandée séparément, de sorte que le débit global de l'agencement dans son ensemble est optimisé pour les conditions dominantes.

2. Procédé selon la revendication 1, dans lequel les première et seconde pluralités d'hydroliennes (10) sont agencées en première et seconde rangées respectives, de manière à former un réseau (1).

3. Procédé selon l'une quelconque des revendications précédentes, dans lequel l'agencement d'hydroliennes comprend au moins une pluralité supplémentaire d'hydroliennes (10).

4. Procédé selon la revendication 3, dans lequel la ou chaque pluralité supplémentaire d'hydroliennes (10) est agencée dans au moins une rangée supplémentaire de l'agencement.

5. Dispositif de commande pour commander un agencement d'hydroliennes comportant des première et seconde pluralités d'hydroliennes pouvant fonctionner pour générer de l'électricité à partir d'un courant d'eau, la première pluralité d'hydroliennes étant en amont d'au moins une des turbines de la seconde pluralité, les hydroliennes présentant des caractéristiques de génération d'énergie électrique individuelles respectives, le dispositif de commande étant agencé pour générer et émettre des signaux de commande relatifs aux caractéristiques de génération d'énergie électrique respectives pour des hydroliennes dans la première pluralité indépendamment des signaux de commande relatifs aux turbines dans la seconde pluralité, le dispositif de commande comprenant :
une unité de réception de mesure (26) agencée pour recevoir des informations de mesure pour les turbines (10) à travers l'ensemble de l'agencement ;
une unité de commande agencée pour utiliser des effets et des conditions mis en place sur la seconde pluralité d'hydroliennes (10) par la première pluralité de turbines dans l'agencement comme source d'informations de commande, et pour utiliser ces informations pour commander les première et seconde pluralités d'hydroliennes (10), chaque pluralité étant commandée séparément, de telle sorte que le débit global de l'agencement dans son ensemble est optimisé pour les conditions dominantes.

6. Agencement d'hydroliennes comprenant des première et seconde pluralités d'hydroliennes (10) pouvant fonctionner pour générer de l'électricité à partir d'un courant d'eau, la première pluralité d'hydroliennes étant en amont d'au moins une des turbines de la seconde pluralité, et un dispositif de commande selon la revendication 5, le dispositif de commande étant relié à chacune des turbines (10) dans l'agencement de commande de celles-ci.

7. Agencement selon la revendication 6, dans lequel les première et seconde pluralités d'hydroliennes (10) sont agencées en première et seconde rangées respectives, de manière à former un réseau (1).

8. Agencement d'hydroliennes selon la revendication 7, comprenant en outre au moins une pluralité supplémentaire d'hydroliennes (10) disposées dans au moins une rangée supplémentaire du réseau.
